# EUROPEAN PATENT APPLICATION

(11) **EP 3 442 200 A1**
(43) Date of publication of application: **13.02.2019**
(21) Application number: 17795598.6
(22) Date of filing: 12.05.2017
(51) Int. Cl.: H04L 29/08, H04L 1/00

(54) **METHOD AND DEVICE FOR TRANSMITTING DOWNLINK CONTROL INFORMATION**

(30) Priority: 13.05.2016 CN 201610321880
(71) Applicant: Huawei Technologies Co., Ltd., Longgang District Shenzhen, Guangdong 518129 (CN)
(72) Inventor: LYU, Yongxia, Shenzhen Guangdong 518129 (CN); SUN, Wei, Shenzhen Guangdong 518129 (CN); GUO, Zhiheng, Shenzhen Guangdong 518129 (CN)
(74) Representative: Pfenning, Meinig & Partner mbB
(86) International application number: PCT/CN2017/084044
(87) International publication number: WO 2017/193980

(57) **Abstract**

This application discloses a downlink control information transmission method and apparatus. The method includes: determining, by a base station, a detection period of detecting DCI by a terminal device and at least one detection moment in the detection period, where the detection period includes at least two TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and sending, by the base station, the DCI to the terminal device at the at least one detection moment in the detection period. Therefore, a quantity of times of performing blind detection by the UE on a PDCCH can be effectively reduced without affecting a to-be-transmitted service, thereby reducing power consumption and overheads of the UE.

## Description

This application claims priority to Chinese Patent Application No. 201610321880.1, filed with the Chinese Patent Office on May 13, 2016 and entitled "DOWNLINK CONTROL INFORMATION TRANSMISSION METHOD AND APPARATUS", which is incorporated herein by reference in its entirety.

### TECHNICAL FIELD

This application relates to the communications field, and in particular, to a downlink control information transmission method and apparatus in the communications field.

### BACKGROUND

In a wireless communications system, for example, in a Long Term Evolution (long term evolution, LTE) system, user equipment (user equipment, UE) detects a physical downlink control channel (physical downlink control channel, PDCCH) in each transmission time interval (transmission time interval, TTI), to obtain downlink control information (downlink control information, DCI) carried on the PDCCH in the TTI.

In a TTI, before detection, the UE can learn neither a size of DCI in the TTI nor a format or a specific location of a PDCCH. The information can be determined only after the UE attempts to detect all possible cases, in other words, performs blind detection. In the prior art, the UE performs blind detection on a PDCCH in each TTI. In this detection method, the UE frequently performs blind detection on the PDCCH, causing enormous power consumption of the UE.

### SUMMARY

In view of this, this application provides a downlink control information transmission method, apparatus, and device, to effectively reduce frequency of performing blind detection by UE on a PDCCH, thereby reducing power consumption of the UE.

According to a first aspect, a downlink control information transmission method is provided. The method includes: determining, by a base station, a detection period of detecting downlink control information DCI by a terminal device and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and sending, by the base station, the DCI to the terminal device at the at least one detection moment in the detection period. In this application, a quantity of times of performing blind detection by the UE on a PDCCH can be effectively reduced without affecting a to-be-transmitted service, thereby reducing power consumption and overheads of the UE. In addition, user experience satisfaction can be further improved.

Optionally, the method further includes: sending, by the base station, time parameter indication information to the terminal device, where the time parameter indication information includes first indication information used to indicate the detection period, so that the detection period can be flexibly determined based on an actual case of the to-be-transmitted service.

Optionally, the method further includes: sending, by the base station, time parameter indication information to the terminal device, where the time parameter indication information includes second indication information used to indicate the at least one detection moment, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved.

Optionally, the sending, by the base station, time parameter indication information to the terminal device includes: sending, by the base station, the time parameter indication information to the terminal device by using a first carrier, where the first carrier is a carrier used to send the DCI, so that a frequency domain resource can be saved and signaling overheads can be reduced.

Optionally, the sending, by the base station, time parameter indication information to the terminal device includes: sending, by the base station, the time parameter indication information and third indication information to the terminal device by using a second carrier, where the third indication information is used to indicate an identifier of a first carrier, and the first carrier is a carrier used to send the DCI, so that a quantity of times of performing blind detection on a PDCCH can be reduced, thereby reducing power consumption of the UE.

According to a second aspect, a downlink control information transmission method is provided. The method includes: determining, by a terminal device, a detection period of detecting downlink control information DCI and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and detecting, by the terminal device, at the at least one detection moment in the detection period, the DCI sent by a base station to the terminal device. In this application, a quantity of times of performing blind detection by the UE on a PDCCH can be effectively reduced without affecting a to-be-transmitted service, thereby reducing power consumption and overheads of the UE. In addition, user experience satisfaction can be further improved.

Optionally, the method further includes: receiving, by the terminal device, time parameter indication information sent by the base station, where the time parameter indication information includes first indication information used to indicate the detection period; and the determining, by a terminal device, a detection period includes: determining, by the terminal device, the detection period based on the first indication information. In the downlink control information transmission method in this application, the detection period is determined by receiving the time parameter indication information, so that the detection period can be flexibly determined based on an actual case of the to-be-transmitted service.

Optionally, the method further includes: receiving, by the terminal device, time parameter indication information sent by the base station, where the time parameter indication information includes second indication information used to indicate the at least one detection moment; and the determining, by a terminal device, at least one detection moment includes: determining, by the terminal device, the at least one detection moment based on the second indication information. In the downlink control information transmission method in this application, the detection moment is determined by receiving the time parameter indication information, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved.

Optionally, the receiving, by the terminal device, time parameter indication information sent by the base station includes: receiving, by the terminal device by using a first carrier, the time parameter indication information sent by the base station, where the first carrier is a carrier used to send the DCI, so that a frequency domain resource can be saved and signaling overheads can be reduced.

Optionally, the receiving, by the terminal device, time parameter indication information sent by the base station includes: receiving, by the terminal device by using a second carrier, the time parameter indication information and third indication information that are sent by the base station, where the third indication information is used to indicate an identifier of a first carrier, and the first carrier is a carrier used to send the DCI, so that a quantity of times of performing blind detection on a PDCCH can be reduced, thereby reducing power consumption of the UE.

According to a third aspect, a downlink control information transmission method is provided. The method includes: sending, by a base station, time parameter indication information to a terminal device, where the time parameter indication information includes first indication information and/or second indication information, the first indication information is used to indicate a detection period of detecting downlink control information DCI by the terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment; and sending, by the base station, the DCI to the terminal device at the detection moment in the detection period, so that the terminal device detects the DCI based on the time parameter indication information. In this application, a quantity of times of performing blind detection by the UE on a PDCCH can be effectively reduced without affecting a to-be-transmitted service, thereby reducing power consumption and overheads of the UE. In addition, user experience satisfaction can be further improved.

Optionally, the sending, by a base station, time parameter indication information to a terminal device includes: sending, by the base station, the time parameter indication information to the terminal device by using a first carrier, where the first carrier is a carrier used to send the DCI, so that a frequency domain resource can be saved and signaling overheads can be reduced.

Optionally, the sending, by a base station, time parameter indication information to a terminal device includes: sending, by the base station, the time parameter indication information and third indication information to the terminal device by using a second carrier, where the third indication information is used to indicate an identifier of a first carrier, and the first carrier is a carrier used to send the DCI, so that a quantity of times of performing blind detection on a PDCCH can be reduced, thereby reducing power consumption of the UE.

According to a fourth aspect, a downlink control information transmission method is provided. The method includes: receiving, by a terminal device, time parameter indication information sent by a base station, where the time parameter indication information includes first indication information and/or second indication information, the first indication information is used to indicate a detection period of detecting downlink control information DCI by the terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment; determining, by the terminal device, the detection period and/or the detection moment based on the time parameter indication information; and detecting, by the terminal device at the detection moment in the detection period, the DCI sent by the base station to the terminal device. In this application, a quantity of times of performing blind detection by the UE on a PDCCH can be effectively reduced without affecting a to-be-transmitted service, thereby reducing power consumption and overheads of the UE. In addition, user experience satisfaction can be further improved.

Optionally, the receiving, by a terminal device, time parameter indication information sent by a base station includes: receiving, by the terminal device by using a first carrier, the time parameter indication information sent by the base station, where the first carrier is a carrier used to send the DCI, so that a frequency domain resource can be saved and signaling overheads can be reduced.

Optionally, the receiving, by a terminal device, time parameter indication information sent by a base station includes: receiving, by the terminal device by using a second carrier, the time parameter indication information and third indication information that are sent by the base station, where the third indication information is used to indicate an identifier of a first carrier, and the first carrier is a carrier used to send the DCI, so that a quantity of times of performing blind detection on a PDCCH can be reduced, thereby reducing power consumption of the UE.

According to a fifth aspect, a downlink control information transmission apparatus is provided. The apparatus includes units configured to perform the steps in the first aspect and the implementations of the first aspect.

According to a sixth aspect, a downlink control information transmission apparatus is provided. The apparatus includes units configured to perform the steps in the second aspect and the implementations of the second aspect.

According to a seventh aspect, a downlink control information transmission apparatus is provided. The apparatus includes units configured to perform the steps in the third aspect and the implementations of the third aspect.

According to an eighth aspect, a downlink control information transmission apparatus is provided. The apparatus includes units configured to perform the steps in the fourth aspect and the implementations of the fourth aspect.

According to a ninth aspect, a downlink control information transmission device is provided. The device includes a processor, a memory, a bus system, and a transceiver. The processor, the memory, and the transceiver are connected by using the bus system. The memory is configured to store an instruction. The processor is configured to execute the instruction stored in the memory, to control the transceiver to receive a signal or send a signal. In addition, when the processor executes the instruction stored in the memory, the execution enables the processor to perform the method in the first aspect or any possible implementation of the first aspect.

According to a tenth aspect, a downlink control information transmission device is provided. The device includes a processor, a memory, a bus system, and a transceiver. The processor, the memory, and the transceiver are connected by using the bus system. The memory is configured to store an instruction. The processor is configured to execute the instruction stored in the memory, to control the transceiver to receive a signal or send a signal. In addition, when the processor executes the instruction stored in the memory, the execution enables the processor to perform the method in the second aspect or any possible implementation of the second aspect.

According to an eleventh aspect, a downlink control information transmission device is provided. The device includes a processor, a memory, a bus system, and a transceiver. The processor, the memory, and the transceiver are connected by using the bus system. The memory is configured to store an instruction. The processor is configured to execute the instruction stored in the memory, to control the transceiver to receive a signal or send a signal. In addition, when the processor executes the instruction stored in the memory, the execution enables the processor to perform the method in the third aspect or any possible implementation of the third aspect.

According to a twelfth aspect, a downlink control information transmission device is provided. The device includes a processor, a memory, a bus system, and a transceiver. The processor, the memory, and the transceiver are connected by using the bus system. The memory is configured to store an instruction. The processor is configured to execute the instruction stored in the memory, to control the transceiver to receive a signal or send a signal. In addition, when the processor executes the instruction stored in the memory, the execution enables the processor to perform the method in the fourth aspect or any possible implementation of the fourth aspect.

Based on the foregoing technical solutions, according to the uplink control information transmission method, apparatus, and device in this application, before blind detection, the user equipment determines the detection period and the detection moment of detecting the DCI, and detects the DCI at the corresponding detection moment, so that a quantity of times of performing blind detection by the user equipment can be reduced, thereby reducing power consumption of the user equipment. In addition, the downlink control information transmission method, apparatus, and device in this application are applicable to a case in which TTIs of different time lengths are configured for the user equipment, and the detection period and the detection moment of the user equipment can be flexibly configured based on an actual case by using the time parameter indication information, thereby improving user experience satisfaction.

### BRIEF DESCRIPTION OF DRAWINGS

FIG. 1 is a schematic flowchart of a downlink control information transmission method according to this application;
FIG. 2 is a schematic flowchart of a downlink control information transmission method according to another embodiment of this application;
FIG. 3 is a schematic flowchart of a downlink control information transmission method according to still another embodiment of this application;
FIG. 4 is a schematic flowchart of a downlink control information transmission method according to yet another embodiment of this application;
FIG. 5 is a schematic block diagram of a downlink control information transmission apparatus according to an embodiment of this application;
FIG. 6 is a schematic block diagram of a downlink control information transmission apparatus according to another embodiment of this application;
FIG. 7 is a schematic block diagram of a downlink control information transmission apparatus according to still another embodiment of this application;
FIG. 8 is a schematic block diagram of a downlink control information transmission apparatus according to yet another embodiment of this application;
FIG. 9 is a schematic block diagram of a downlink control information transmission device according to an embodiment of this application;
FIG. 10 is a schematic block diagram of a downlink control information transmission device according to another embodiment of this application;
FIG. 11 is a schematic block diagram of a downlink control information transmission device according to still another embodiment of this application; and
FIG. 12 is a schematic block diagram of a downlink control information transmission device according to yet another embodiment of this application.

### DESCRIPTION OF EMBODIMENTS

The technical solutions of this application are applicable to various communications systems, such as a Global System for Mobile Communications (global system for mobile communications, GSM) system, a Code Division Multiple Access (code division multiple access, CDMA) system, a Wideband Code Division Multiple Access (wideband code division multiple access, WCDMA) system, a general packet radio service (general packet radio service, GPRS), an LTE frequency division duplex (frequency division duplex, FDD) system, an LTE time division duplex (time division duplex, TDD) system, a Universal Mobile Telecommunications System (universal mobile telecommunications system, UMTS), and a future 5G communications system.

It should be further understood that in this application, a terminal device may communicate with one or more core networks by using a radio access network (radio access network, RAN), and the user equipment may be referred to as an access terminal, UE, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, or a terminal device in a future 5G network.

In this application, a network side device may be configured to communicate with the terminal device. The network side device may be a base transceiver station (base transceiver station, BTS) in GSM or CDMA, or may be a NodeB (nodeB, NB) in WCDMA, or may be an evolved NodeB (evolved NodeB, eNB) in LTE. Alternatively, the network side device may be a relay node, an access point, an in-vehicle device, a wearable device, a base station device in a future 5G network, or the like. This is not limited in this application. However, for ease of description, the following embodiments use a base station eNB and user equipment UE as an example for description.

For ease of understanding of this application, the following several elements are first described herein before this application is described.

A PDCCH is a physical downlink control channel, and is located in a control domain part of a time-frequency resource in a subframe. To be specific, the PDCCH occupies first N orthogonal frequency division multiplexing (orthogonal frequency division multiplexing, OFDM) symbols in a TTI in time domain, and this is indicated by a physical control format indicator channel (physical control format indicator channel, PCFICH), where 0<N≤3, and N may be 4 when a system bandwidth is 1.4 M; and the PDCCH occupies all available subcarriers in the system bandwidth in frequency domain. Herein, the available subcarriers are subcarriers other than subcarriers occupied by the PCFICH, a physical hybrid automatic repeat request indicator channel (physical hybrid automatic repeat request indicator channel, PHICH), and a reference signal. A resource that is indicated by one OFDM symbol in a time domain dimension and one subcarrier in a frequency domain dimension is referred to as a resource element (resource element, RE), and four REs constitute one resource element group (resource element group, REG). A control channel element (control channel element, CCE) is further defined for the PDCCH, and one CCE always includes nine REGs. For example, when the system bandwidth is 5 M, there are a total of 25 physical resource blocks (physical resource block, PRB) in frequency domain. One PRB includes 12 subcarriers in frequency domain, and occupies 0.5 ms in time domain. Resource mapping manners of the PCFICH, the PHICH, and the reference signal are fixed. The UE first detects the PCFICH in a fixed resource mapping manner, to obtain a quantity N of OFDM symbols occupied by the PDCCH, for example, N=2. In this case, there are a total of 600 REs, namely, 150 REGs. If the PCFICH, the PHICH, and the reference signal occupy a total of 57 REGs, available resources of the PDCCH are 93 REGs, namely, about 10 CCEs.

There are four formats of PDCCHs, and PDCCHs in different formats occupy different quantities of resources, in other words, have different aggregation levels (aggregation level, AL). Content carried on the PDCCH is referred to as DCI, a size of the DCI is fixed, and different bit rates are obtained by using PDCCHs in different formats. For example, a bit rate obtained by using a PDCCH in a format 2 is twice a bit rate obtained by using a PDCCH in a format 3. A smaller quantity of occupied CCEs indicates a higher bit rate, and a better channel condition of UE is required. Only in this way, a probability of correctly decoding a PDCCH with a high bit rate by the UE can be improved. To be specific, if a channel condition of the UE is relatively poor, only low-bit-rate transmission can be selected, for example, a format of a PDCCH that occupies a relatively large quantity of CCEs is selected. In addition, the UE does not need to perform blind detection on a PDCCH with a bit rate greater than 3/4. Based on different channel conditions of the UE, a higher layer may be selected to configure different transmission modes for the UE, and different transmission modes correspond to different sizes of DCI. In addition to a current transmission mode configured by the higher layer, each UE can further use a rollback mode by default, and a size of DCI corresponding to the rollback mode is different from a size of DCI corresponding to the current mode.

In a TTI, for available control domain resources, CCEs are aggregated based on a tree structure, to constitute available PDCCH control channels in different formats. When a CCE aggregation level AL=1, each CCE constitutes one PDCCH in a format 0. When a CCE aggregation level AL=2, two consecutive CCEs constitute one PDCCH in a format 1. When a CCE aggregation level AL=4, four consecutive CCEs constitute one PDCCH in a format 2. When a CCE aggregation level AL=8, eight consecutive CCEs are aggregated into one PDCCH in a format 3. To be specific, a relationship between a PDCCH format, a CCE aggregation level, and a quantity of occupied CCEs is shown in the following Table 1.

**Table 1**

| **PDCCH format (Format)** | **CCE aggregation level AL** | **Quantity of CCEs** |
|---|---|---|
| Format 0 | 1 | 1 |
| Format 1 | 2 | 2 |
| Format 2 | 4 | 4 |
| Format 3 | 8 | 8 |

All CCEs may be classified into two types of search spaces: a common search space and a UE specific search space. The common search space includes CCEs numbered 0 to 15, namely, first 16 CCEs. A PDCCH in the common search space is mainly used to carry common DCI, and all UEs need to detect the DCI in the common search space, to obtain common scheduling information such as system information. There are only two formats of PDCCHs in the common search space: the format 2 and the format 3. There are the foregoing four formats of PDCCHs in the UE specific search space, and the PDCCHs are used to carry UE specific DCI. Each PDCCH format, namely, each aggregation level, corresponds to one UE specific search space. Different UE specific search spaces may overlap. As shown in Table 2, a size of a search space, namely, a quantity of candidate PDCCH channels, is related to only an aggregation level.

**Table 2**

| Search space | | | Quantity of candidate PDCCH channels |
|---|---|---|---|
| Type | Aggregation level AL | Quantity of CCEs | |
| UE specific search space | 1 | 6 | 6 |
| | 2 | 12 | 6 |
| | 4 | 8 | 2 |
| | 8 | 16 | 2 |
| Common search space | 4 | 16 | 4 |
| | 8 | 16 | 2 |

For example, in the UE specific search space, there are six candidate PDCCH channels in a search space corresponding to AL=2, and six consecutive candidate PDCCH channels constitute one search space at AL=2.

Because each UE has a transmission mode configured by the higher layer, in the UE specific search space, the UE needs to separately detect sizes of two types of DCI: a size of DCI in the current mode configured by the higher layer, and a size of DCI in a rollback mode. In addition to the UE specific search space, the UE further needs to detect the common search space, and the common search space also corresponds to sizes of two types of DCI. A correspondence between a transmission mode and a format of DCI that needs to be detected may be shown in Table 3.

**Table 3**

| **Transmission mode** | **DCI that needs to be detected** | |
|---|---|---|
| | **Common search space** | **UE specific search space** |
| 1 | 0/1A/3/3A, 1C | 0/1A, 1 |
| 2 | 0/1A/3/3A, 1C | 0/1A, 1 |
| 3 | 0/1A/3/3A, 1C | 0/1A, 2A |
| 4 | 0/1A/3/3A, 1C | 0/1A, 2 |
| 5 | 0/1A/3/3A, 1C | 0/1A, 1D |
| 6 | 0/1A/3/3A, 1C | 0/1A, 1B |
| 7 | 0/1A/3/3A, 1C | 0/1A, 1 |
| 8 | 0/1A/3/3A, 1C | 0/1A, 2B |

To reduce a quantity of times of performing blind detection on a PDCCH (in other words, detecting DCI) by user equipment, thereby reducing relatively high power consumption caused by blind detection, this application provides the following technical solutions: a technical solution of determining, before blind detection, a detection period of detecting DCI by user equipment and at least one detection moment in the detection period, and a technical solution of sending, to the user equipment, time parameter indication information used to indicate the detection period and/or the detection moment. The following describes in detail the technical solutions with reference to accompanying drawings. It should be understood that the several types of technical solutions may be independently used, or may be used in combination.

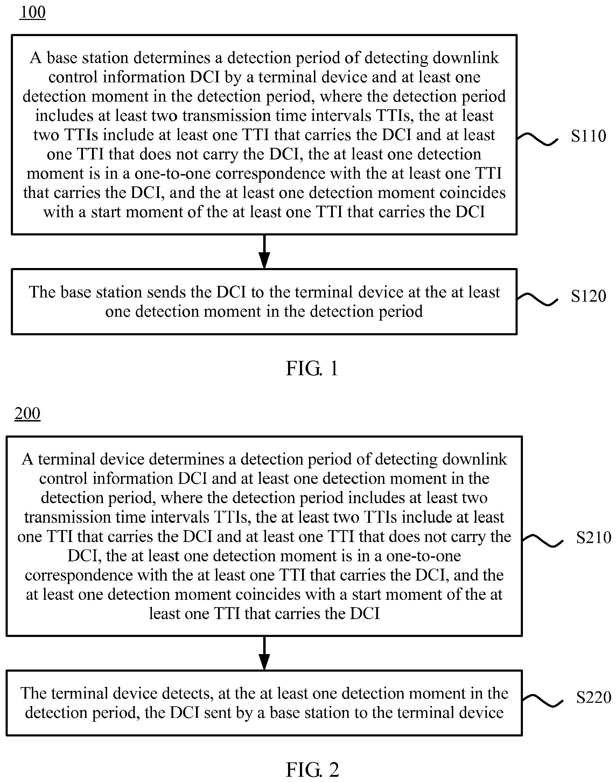

FIG. 1 is a schematic flowchart of a downlink control information transmission method 100 according to this application. As shown in FIG. 1, the method 100 includes the following steps:
S110. A base station determines a detection period of detecting downlink control information DCI by a terminal device and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI.
S120. The base station sends the DCI to the terminal device at the at least one detection moment in the detection period.

To support different scenarios and service requirements, a communications system may configure a TTI of a very short time length. For example, the time length of the TTI may be 125 µs, 250 µs, 500 µs, 750 µs, or 1 ms. Alternatively, the communications system may configure a plurality of TTIs of different time lengths. As the time length of the TTI continuously decreases, overheads and power consumption that are caused by blind detection on a PDCCH increase. Especially, when UE has no to-be-transmitted service, overheads and power consumption that are caused by detection on a PDCCH are meaningless, and such overheads and power consumption cause a significant reduction in user experience satisfaction.

Therefore, in the downlink control information transmission method in this application, before blind detection, the base station may determine, based on a delay requirement of a to-be-transmitted service of the UE, the detection period and the detection moment of detecting the DCI by the UE. When the delay requirement of the to-be-transmitted service is relatively low, the base station may send the DCI to the UE in a relatively long detection period (for example, a detection period including one TTI that carries the DCI and three TTIs that do not carry the DCI). When the delay requirement of the to-be-transmitted service is relatively high, the base station may send the DCI to the UE in a relatively short detection period (for example, a detection period including one TTI that carries the DCI and one TTI that does not carry the DCI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, user experience satisfaction can be further improved.

For example, a machine-to-machine (machine-to-machine, M2M) communications terminal is a terminal that implements machine type communication, and M2M type communication relates to a single service and is insensitive to a communication delay, but focuses on a reduction in costs and power consumption of the M2M terminal. Therefore, a reduction in a quantity of times of performing blind detection on a PDCCH is essential for the M2M terminal. The foregoing embodiment is merely used as an example for description, and this application is not limited thereto.

In this application, the detection period and the detection moment may be determined in a preset manner. Alternatively, the detection period and the detection moment may be indicated by using system information. Therefore, optionally, the method 200 further includes the following step:
S130. The base station sends time parameter indication information to the terminal device, where the time parameter indication information includes first indication information used to indicate the detection period.

It should be understood that the time parameter indication information may be indication information obtained by extending existing system information, or may be redefined indication information.

For example, the base station may add an integer K (K>1) to radio resource control (radio resource control, RRC) signaling, and then send the radio resource control signaling to the UE as the first indication information. The UE may multiply K and a time length of a currently activated minimum TTI of the UE, to determine the detection period P, namely, P=K×Tₘᵢₙ, where Tₘᵢₙ is the time length of the currently activated minimum TTI. Alternatively, the base station may directly add a time parameter P to RRC signaling, the time parameter P is used to indicate the detection period, and a unit of P may be microsecond or millisecond.

Therefore, in the downlink control information transmission method in this application, the user equipment is notified of the detection period by using the time parameter indication information, so that the detection period can be flexibly determined based on an actual case of the to-be-transmitted service. The foregoing embodiment is merely used as an example for description, and this application is not limited thereto. For example, the time parameter indication information and the DCI may be sent at a same moment, or the time parameter indication information may be sent before the DCI.

After determining the detection period, the UE may determine the detection moment based on preset information in the UE, or may determine the detection moment based on indication information sent by the base station. Therefore, optionally, the method 200 further includes the following step:

S140. The base station sends time parameter indication information to the terminal device, where the time parameter indication information includes second indication information used to indicate the at least one detection moment.

It should be understood that the time parameter indication information may be indication information obtained by extending existing system information, or may be redefined indication information.

For example, the base station may add an integer O (O≥0) to RRC signaling, and then send the RRC signaling to the UE as the second indication information. O may represent an offset of the detection moment relative to a start moment of the detection period. The UE determines, as the detection moment based on the integer O, a start moment of a TTI whose relative index number is O in a period. For example, a detection period includes five TTIs whose relative index numbers are respectively 0, 1, 2, 3, and 4. When O=1, the second indication information is used to indicate, to the UE, that a start moment of a TTI whose relative index number is 1 is the detection moment. Alternatively, the base station may directly add a time parameter O to RRC signaling, the time parameter O is used to indicate an offset of a detection moment in a detection period relative to a start moment of the detection period, and a unit of O may be microsecond or millisecond.

Therefore, in the downlink control information transmission method in this application, the user equipment is notified of the detection moment by using the time parameter indication information, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved. The foregoing embodiment is merely used as an example for description, and this application is not limited thereto.

Optionally, the sending, by the base station, time parameter indication information to the terminal device includes the following step:
S150. The base station sends the time parameter indication information to the terminal device by using a first carrier, where the first carrier is a carrier used to send the DCI.

In this application, the base station sends the time parameter indication information and the DCI to the UE by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, the sending, by the base station, time parameter indication information to the terminal device includes the following step:
S160. The base station sends the time parameter indication information and third indication information to the terminal device by using a second carrier, where the third indication information is used to indicate an identifier of a first carrier, and the first carrier is a carrier used to send the DCI.

In this application, the base station first sends, to the UE by using the second carrier, the time parameter indication information and the third indication information that indicates the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

Therefore, in the downlink control information transmission method in this application, before blind detection, the detection period and the detection moment of detecting the DCI by the user equipment are determined, and the DCI is sent at the corresponding detection moment, so that a quantity of times of performing blind detection by the user equipment can be reduced, thereby reducing power consumption of the user equipment. In addition, the downlink control information transmission method in this application is applicable to a case in which TTIs of different time lengths are configured for the user equipment, and the detection period and the detection moment of the user equipment can be flexibly configured based on an actual case by using the time parameter indication information, thereby improving user experience satisfaction.

With reference to FIG. 1, the foregoing describes in detail the downlink control information transmission method from a perspective of the base station. With reference to FIG. 2, the following describes in detail the solution from a perspective of the user equipment.

As shown in FIG. 2, a downlink control information transmission method 200 according to this application includes the following steps:
S210. A terminal device determines a detection period of detecting downlink control information DCI and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI.
S220. The terminal device detects, at the at least one detection moment in the detection period, the DCI sent by a base station to the terminal device.

In the downlink control information transmission method in this application, before blind detection, the UE may determine, based on a delay requirement of a to-be-transmitted service, the detection period and the detection moment of detecting the DCI. When the delay requirement of the to-be-transmitted service is relatively low, the UE may determine to detect the DCI in a relatively long detection period (for example, a detection period including one TTI that carries the DCI and three TTIs that do not carry the DCI). When the delay requirement of the to-be-transmitted service is relatively high, the UE may determine to detect the DCI in a relatively short detection period (for example, a detection period including one TTI that carries the DCI and one TTI that does not carry the DCI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, user experience satisfaction can be further improved.

For example, an M2M terminal is a terminal that implements machine type communication, and M2M type communication relates to a single service and is insensitive to a communication delay, but focuses on a reduction in costs and power consumption of the M2M terminal. Therefore, a reduction in a quantity of times of performing blind detection on a PDCCH is essential for the M2M terminal. The foregoing embodiment is merely used as an example for description, and this application is not limited thereto.

In this application, the detection period and the detection moment may be determined in a preset manner. Alternatively, the detection period and the detection moment may be indicated by using system information. Therefore, optionally, the method 200 further includes the following step:
S230. The terminal device receives time parameter indication information sent by the base station, where the time parameter indication information includes first indication information used to indicate the detection period.

The determining, by a terminal device, a detection period includes the following step:
S211. The terminal device determines the detection period based on the first indication information.

It should be understood that the time parameter indication information may be indication information obtained by extending existing system information, or may be redefined indication information.

For example, the UE may receive the first indication information sent by the base station by using RRC signaling, and the first indication information includes an integer K (K≥1). The UE may multiply K and a time length of a currently activated minimum TTI of the UE, to determine the detection period P, namely, P=K×Tₘᵢₙ, where Tₘᵢₙ is the time length of the currently activated minimum TTI. Alternatively, the UE may directly receive RRC signaling including a time parameter P, the time parameter P is used to indicate the detection period, and a unit of P may be microsecond or millisecond.

Therefore, in the downlink control information transmission method in this application, the detection period is determined by receiving the time parameter indication information, so that the detection period can be flexibly determined based on an actual case of the to-be-transmitted service. The foregoing embodiment is merely used as an example for description, and this application is not limited thereto.

After determining the detection period, the UE may determine the detection moment based on preset information in the UE, or may determine the detection moment based on indication information sent by the base station. Therefore, optionally, the method 200 further includes the following step:
S240. The terminal device receives time parameter indication information sent by the base station, where the time parameter indication information includes second indication information used to indicate the at least one detection moment.

The determining, by a terminal device, at least one detection moment includes the following step:
S212. The terminal device determines the at least one detection moment based on the second indication information.

It should be understood that the time parameter indication information may be indication information obtained by extending existing system information, or may be redefined indication information.

For example, the UE may receive the second indication information sent by the base station by using RRC signaling, and the second indication information includes an integer O (O≥0). O may represent an offset of the detection moment relative to a start moment of the detection period. The UE determines, as the detection moment based on the integer O, a start moment of a TTI whose relative index number is O in a period. For example, a detection period includes five TTIs whose relative index numbers are respectively 0, 1, 2, 3, and 4. When O=1, the second indication information is used to indicate, to the UE, that a start moment of a TTI whose relative index number is 1 is the detection moment. Alternatively, the base station may directly receive RRC signaling including a time parameter O, the time parameter O is used to indicate an offset of a detection moment in a detection period relative to a start moment of the detection period, and a unit of O may be microsecond or millisecond.

Therefore, in the downlink control information transmission method in this application, the detection moment is determined by receiving the time parameter indication information, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved. The foregoing embodiment is merely used as an example for description, and this application is not limited thereto.

Optionally, the receiving, by the terminal device, time parameter indication information sent by the base station includes the following step:
S250. The terminal device receives, by using a first carrier, the time parameter indication information sent by the base station, where the first carrier is a carrier used to send the DCI.

In this application, the UE receives the time parameter indication information and the DCI by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, the receiving, by the terminal device, time parameter indication information sent by the base station includes the following step:
S260. The terminal device receives, by using a second carrier, the time parameter indication information and third indication information that are sent by the base station, where the third indication information is used to indicate an identifier of a first carrier, and the first carrier is a carrier used to send the DCI.

In this application, the time parameter indication information and the DCI are not received by using a same carrier. The UE receives the time parameter indication information and the third indication information by using the second carrier, and the third indication information is used to indicate the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

Therefore, in the downlink control information transmission method in this application, before blind detection, the user equipment determines the detection period and the detection moment of detecting the DCI, and detects the DCI at the corresponding detection moment, so that a quantity of times of performing blind detection by the user equipment can be reduced, thereby reducing power consumption of the user equipment. In addition, the downlink control information transmission method in this application is applicable to a case in which TTIs of different time lengths are configured for the user equipment, and the detection period and the detection moment of the user equipment can be flexibly configured based on an actual case by using the time parameter indication information, thereby improving user experience satisfaction.

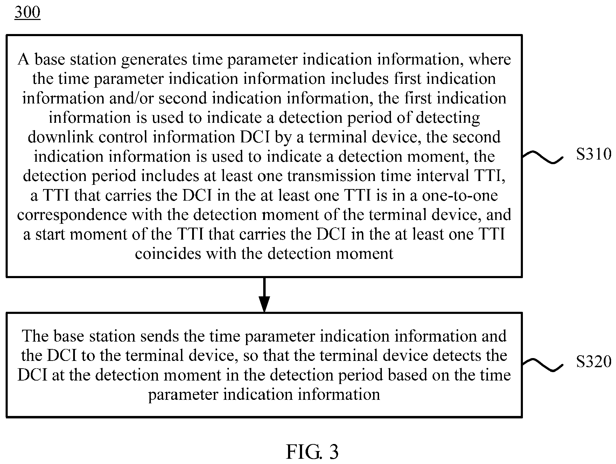

With reference to FIG. 3, the following describes in detail a downlink control information transmission method according to another embodiment of this application from a perspective of the base station.

As shown in FIG. 3, a downlink control information transmission method 300 according to another embodiment of this application includes the following steps:
S310. A base station generates time parameter indication information, where the time parameter indication information includes first indication information and/or second indication information, the first indication information is used to indicate a detection period of detecting downlink control information DCI by a terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment.
S320. The base station sends the time parameter indication information and the DCI to the terminal device, so that the terminal device detects the DCI at the detection moment in the detection period based on the time parameter indication information.

In the downlink control information transmission method in this application, before blind detection, the base station may determine, based on a delay requirement of a to-be-transmitted service of the UE, the detection period and the detection moment of detecting the DCI by the UE. When the delay requirement of the to-be-transmitted service is relatively low, the base station may send the DCI to the UE in a relatively long detection period (for example, a detection period including three TTIs). When the delay requirement of the to-be-transmitted service is relatively high, the base station may send the DCI to the UE in a relatively short detection period (for example, a detection period including one TTI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, for some emergent services that require the UE to immediately detect the DCI, in this application, the detection period and the detection moment of the UE can be adjusted by using the time parameter indication information, to meet the requirement of such services, thereby improving user experience satisfaction.

In this application, the time parameter indication information sent by the base station may include either the first indication information or the second indication information, or may include both the first indication information and the second indication information. After receiving the time parameter indication information including the first indication information, the UE may detect the DCI at a preset detection moment. After receiving the time parameter indication information including the second indication information, the UE may detect the DCI in a preset detection period.

For example, the first indication information and the second indication information may be the first indication information and the second indication information in the method 100. For brevity, details are not described herein again. The foregoing embodiment is merely used as an example for description, and this application is not limited thereto.

Optionally, the sending, by the base station, the time parameter indication information to the terminal device includes the following step:
S330. The base station sends the time parameter indication information to the terminal device by using a first carrier, where the first carrier is a carrier used to send the DCI.

In this application, the base station sends the time parameter indication information and the DCI to the UE by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, the sending, by the base station, the time parameter indication information to the terminal device includes the following step:
S340. The base station sends the time parameter indication information and third indication information to the terminal device by using a second carrier, where the third indication information is used to indicate an identifier of a first carrier, and the first carrier is a carrier used to send the DCI.

In this application, the base station first sends, to the UE by using the second carrier, the time parameter indication information and the third indication information that indicates the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

Therefore, in the downlink control information transmission method in this application, before blind detection, the detection period and/or the detection moment of detecting the DCI by the user equipment are/is indicated by using the time parameter indication information, and the DCI is sent at the corresponding detection moment, so that a quantity of times of performing blind detection by the user equipment can be reduced, thereby reducing power consumption of the user equipment. In addition, the downlink control information transmission method in this application is applicable to a case in which TTIs of different time lengths are configured for the user equipment, and the detection period and the detection moment of the user equipment can be flexibly configured based on an actual case, thereby improving user experience satisfaction.

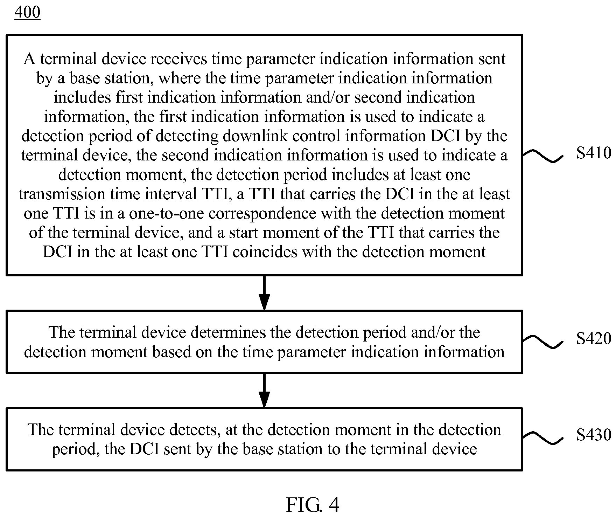

With reference to FIG. 4, the following describes in detail a downlink control information transmission method according to another embodiment of this application from a perspective of the user equipment.

As shown in FIG. 4, a downlink control information transmission method 400 according to another embodiment of this application includes the following steps:
S410. A terminal device receives time parameter indication information sent by a base station, where the time parameter indication information includes first indication information and/or second indication information, the first indication information is used to indicate a detection period of detecting downlink control information DCI by the terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment.
S420. The terminal device determines the detection period and/or the detection moment based on the time parameter indication information.
S430. The terminal device detects, at the detection moment in the detection period, the DCI sent by the base station to the terminal device.

In the downlink control information transmission method in this application, before blind detection, the UE may determine, based on a delay requirement of a to-be-transmitted service, the detection period and the detection moment of detecting the DCI. When the delay requirement of the to-be-transmitted service is relatively low, the UE may detect the DCI in a relatively long detection period (for example, a detection period including three TTIs). When the delay requirement of the to-be-transmitted service is relatively high, the UE may detect the DCI in a relatively short detection period (for example, a detection period including one TTI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, for some emergent services that require the UE to immediately detect the DCI, in this application, the detection period and the detection moment of the UE can be adjusted by using the time parameter indication information, to meet the requirement of such services, thereby improving user experience satisfaction.

In this application, the time parameter indication information sent by the base station may include either the first indication information or the second indication information, or may include both the first indication information and the second indication information. After receiving the time parameter indication information including the first indication information, the UE may detect the DCI at a preset detection moment. After receiving the time parameter indication information including the second indication information, the UE may detect the DCI in a preset detection period. For example, the first indication information and the second indication information may be the first indication information and the second indication information in the method 200. For brevity, details are not described herein again. The foregoing embodiment is merely used as an example for description, and this application is not limited thereto.

Optionally, the receiving, by a terminal device, time parameter indication information sent by a base station includes the following step:
S440. The terminal device receives, by using a first carrier, the time parameter indication information sent by the base station, where the first carrier is a carrier used to send the DCI.

In this application, the UE receives the time parameter indication information and the DCI by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, the receiving, by a terminal device, time parameter indication information sent by a base station includes the following step:
S450. The terminal device receives, by using a second carrier, the time parameter indication information and third indication information that are sent by the base station, where the third indication information is used to indicate an identifier of a first carrier, and the first carrier is a carrier used to send the DCI.

In this application, the time parameter indication information and the DCI are not received by using a same carrier. The UE receives the time parameter indication information and the third indication information by using the second carrier, and the third indication information is used to indicate the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

Therefore, in the downlink control information transmission method in this application, before blind detection, the user equipment determines, based on the time parameter indication information, the detection period and/or the detection moment of detecting the DCI, and detects the DCI at the corresponding detection moment, so that a quantity of times of performing blind detection by the user equipment can be reduced, thereby reducing power consumption of the user equipment. In addition, the downlink control information transmission method in this application is applicable to a case in which TTIs of different time lengths are configured for the user equipment, and the detection period and the detection moment of the user equipment can be flexibly configured based on an actual case, thereby improving user experience satisfaction.

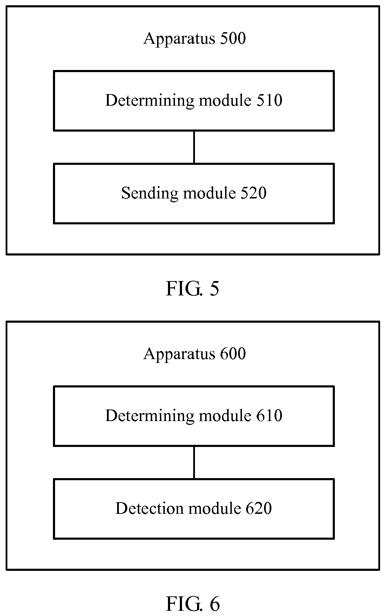

FIG. 5 is a schematic block diagram of a downlink control information transmission apparatus 500 according to an embodiment of this application. As shown in FIG. 5, the apparatus 500 includes:
a determining module 510, configured to determine a detection period of detecting downlink control information DCI by a terminal device and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
a sending module 520, configured to send the DCI to the terminal device at the at least one detection moment in the detection period determined by the determining module 510.

Before blind detection, the downlink control information transmission apparatus in this application may determine, based on a delay requirement of a to-be-transmitted service of the UE, the detection period and the detection moment of detecting the DCI by the UE. When the delay requirement of the to-be-transmitted service is relatively low, the apparatus may send the DCI to the UE in a relatively long detection period (for example, a detection period including one TTI that carries the DCI and three TTIs that do not carry the DCI). When the delay requirement of the to-be-transmitted service is relatively high, the apparatus may send the DCI to the UE in a relatively short detection period (for example, a detection period including one TTI that carries the DCI and one TTI that does not carry the DCI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, user experience satisfaction can be further improved. The foregoing embodiment is merely used as an example for description, and this application is not limited thereto.

Optionally, the sending module 520 is further configured to:
send time parameter indication information to the terminal device, where the time parameter indication information includes first indication information used to indicate the detection period.

The downlink control information transmission apparatus in this application notifies the user equipment of the detection period by using the time parameter indication information, so that the detection period can be flexibly determined based on an actual case of the to-be-transmitted service. The foregoing embodiment is merely used as an example for description, and this application is not limited thereto.

Optionally, the sending module 520 is further configured to:
send time parameter indication information to the terminal device, where the time parameter indication information includes second indication information used to indicate the at least one detection moment.

Therefore, the downlink control information transmission apparatus in this application notifies the user equipment of the detection moment by using the time parameter indication information, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved. The foregoing embodiment is merely used as an example for description, and this application is not limited thereto.

Optionally, that the sending module 520 sends time parameter indication information to the terminal device includes:
sending, by the sending module 520, the time parameter indication information to the terminal device by using a first carrier, where the first carrier is a carrier used to send the DCI.

In this application, the sending module 520 sends the time parameter indication information and the DCI to the UE by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, that the sending module 520 sends time parameter indication information to the terminal device includes:
sending, by the sending module 520, the time parameter indication information and third indication information to the terminal device by using a second carrier, where the third indication information is used to indicate an identifier of a first carrier, and the first carrier is a carrier used to send the DCI.

In this application, the sending module 520 first sends, to the UE by using the second carrier, the time parameter indication information and the third indication information that indicates the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

The apparatus 500 according to this application may correspond to the base station in the downlink control information transmission method 100 in this application, and the foregoing and other operations and/or functions of the modules in the apparatus 500 are separately intended to implement the corresponding procedure of the method 100 in FIG. 1. For brevity, details are not described herein.

Therefore, before blind detection, the downlink control information transmission apparatus in this application determines the detection period and the detection moment of detecting the DCI by the user equipment, and sends the DCI at the corresponding detection moment, so that a quantity of times of performing blind detection by the user equipment can be reduced, thereby reducing power consumption of the user equipment. In addition, the downlink control information transmission apparatus in this application is applicable to a case in which TTIs of different time lengths are configured for the user equipment, and the detection period and the detection moment of the user equipment can be flexibly configured based on an actual case by using the time parameter indication information, thereby improving user experience satisfaction.

FIG. 6 is a schematic block diagram of a downlink control information transmission apparatus 600 according to an embodiment of this application. As shown in FIG. 6, the apparatus 600 includes:
a determining module 610, configured to determine a detection period of detecting downlink control information DCI and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
a detection module 620, configured to detect, at the at least one detection moment in the detection period determined by the determining module 610, the DCI sent by a base station to the apparatus 600.

In the downlink control information transmission apparatus in this application, before blind detection, the determining module 610 may determine, based on a delay requirement of a to-be-transmitted service, the detection period and the detection moment of detecting the DCI. When the delay requirement of the to-be-transmitted service is relatively low, the determining module 610 may determine to detect the DCI in a relatively long detection period (for example, a detection period including one TTI that carries the DCI and three TTIs that do not carry the DCI). When the delay requirement of the to-be-transmitted service is relatively high, the determining module 610 may determine to detect the DCI in a relatively short detection period (for example, a detection period including one TTI that carries the DCI and one TTI that does not carry the DCI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, user experience satisfaction can be further improved. The foregoing embodiment is merely used as an example for description, and this application is not limited thereto.

Optionally, the apparatus 600 further includes:
a receiving module 630, configured to receive time parameter indication information sent by the base station, where the time parameter indication information includes first indication information used to indicate the detection period.

That a determining module 610 determines a detection period includes:
determining, by the determining module 610, the detection period based on the first indication information.

The downlink control information transmission apparatus in this application determines the detection period by receiving the time parameter indication information, so that the detection period can be flexibly determined based on an actual case of the to-be-transmitted service. The foregoing embodiment is merely used as an example for description, and this application is not limited thereto.

Optionally, the apparatus 600 further includes:
a receiving module 630, configured to receive time parameter indication information sent by the base station, where the time parameter indication information includes second indication information used to indicate the at least one detection moment.

That a determining module 610 determines at least one detection moment includes:
determining, by the determining module 610, the at least one detection moment based on the second indication information.

The downlink control information transmission apparatus in this application determines the detection moment by receiving the time parameter indication information, so that the detection moment can be flexibly determined based on an actual case, for example, when TTIs of a plurality of time lengths are configured for the user equipment. In addition, when there are a relatively large quantity of user equipments, different detection moments in a same detection period can be configured for different user equipments based on offsets, so that transmission resource utilization can be improved. The foregoing embodiment is merely used as an example for description, and this application is not limited thereto.

Optionally, that a receiving module 630 receives time parameter indication information sent by the base station includes:
receiving, by the receiving module 630 by using a first carrier, the time parameter indication information sent by the base station, where the first carrier is a carrier used to send the DCI.

In this application, the receiving module 630 receives the time parameter indication information and the DCI by using a same carrier (namely, the first carrier), and the apparatus 600 detects a PDCCH in each TTI by default when establishing a link. After obtaining the time parameter indication information, the detection module 620 detects the DCI on a corresponding PDCCH based on the detection period and/or the detection moment that are/is indicated by the time parameter indication information. Therefore, a frequency domain resource can be saved and signaling overheads can be reduced.

Optionally, that a receiving module 630 receives time parameter indication information sent by the base station includes:
receiving, by the receiving module 630 by using a second carrier, the time parameter indication information and third indication information that are sent by the base station, where the third indication information is used to indicate an identifier of a first carrier, and the first carrier is a carrier used to send the DCI.

In this application, the time parameter indication information and the DCI are not received by using a same carrier. The receiving module 630 receives the time parameter indication information and the third indication information by using the second carrier, and the third indication information is used to indicate the identifier of the first carrier used to send the DCI. The detection module 620 detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

The apparatus 600 according to this application may correspond to the terminal device in the downlink control information transmission method 200 in this application, and the foregoing and other operations and/or functions of the modules in the apparatus 600 are separately intended to implement the corresponding procedure of the method 200 in FIG. 2. For brevity, details are not described herein.

Therefore, before blind detection, the downlink control information transmission apparatus in this application determines the detection period and the detection moment of detecting the DCI, and detects the DCI at the corresponding detection moment, so that a quantity of times of performing blind detection by the user equipment can be reduced, thereby reducing power consumption of the user equipment. In addition, the downlink control information transmission apparatus in this application is applicable to a case in which TTIs of different time lengths are configured for the user equipment, and the detection period and the detection moment of the user equipment can be flexibly configured based on an actual case by using the time parameter indication information, thereby improving user experience satisfaction.

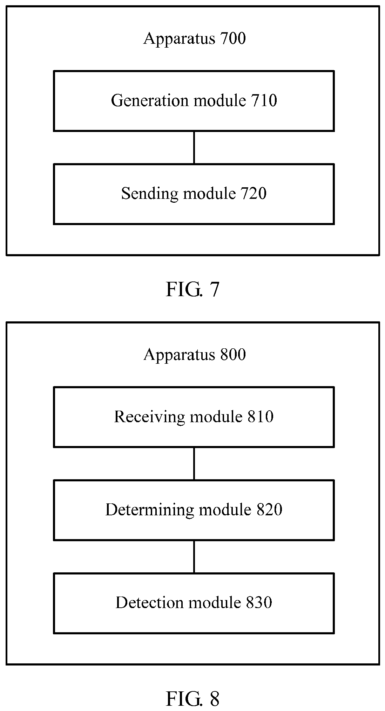

FIG. 7 is a schematic block diagram of a downlink control information transmission apparatus 700 according to another embodiment of this application. As shown in FIG. 7, the apparatus 700 includes:
a generation module 710, configured to generate time parameter indication information, where the time parameter indication information includes first indication information and/or second indication information, the first indication information is used to indicate a detection period of detecting downlink control information DCI by a terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment; and
a sending module 720, configured to send the time parameter indication information generated by the generation module 710 and the DCI to the terminal device, so that the terminal device detects the DCI at the detection moment in the detection period based on the time parameter indication information.

Before blind detection, the downlink control information transmission apparatus in this application may determine, based on a delay requirement of a to-be-transmitted service of the UE, the detection period and the detection moment of detecting the DCI by the UE. When the delay requirement of the to-be-transmitted service is relatively low, the apparatus may send the DCI to the UE in a relatively long detection period (for example, a detection period including three TTIs). When the delay requirement of the to-be-transmitted service is relatively high, the apparatus may send the DCI to the UE in a relatively short detection period (for example, a detection period including one TTI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the UE on a PDCCH can be effectively reduced without affecting the to-be-transmitted service, thereby reducing power consumption and overheads of the UE. In addition, for some emergent services that require the UE to immediately detect the DCI, in this application, the detection period and the detection moment of the UE can be adjusted by using the time parameter indication information, to meet the requirement of such services, thereby improving user experience satisfaction.

In this application, the time parameter indication information may include either the first indication information or the second indication information, or may include both the first indication information and the second indication information. After receiving the time parameter indication information including the first indication information, the UE may detect the DCI at a preset detection moment. After receiving the time parameter indication information including the second indication information, the UE may detect the DCI in a preset detection period.

For example, the first indication information and the second indication information may be the first indication information and the second indication information in the method 100. For brevity, details are not described herein again. The foregoing embodiment is merely used as an example for description, and this application is not limited thereto.

Optionally, that a sending module 720 sends the time parameter indication information to the terminal device includes:
sending, by the sending module 720, the time parameter indication information to the terminal device by using a first carrier, where the first carrier is a carrier used to send the DCI.

In this application, the sending module 720 sends the time parameter indication information and the DCI to the UE by using a same carrier (namely, the first carrier), and the UE detects a PDCCH in each TTI by default when establishing a link. After obtaining the time parameter indication information, the UE detects the DCI on a corresponding PDCCH based on the detection period and/or the detection moment that are/is indicated by the time parameter indication information. Therefore, a frequency domain resource can be saved and signaling overheads can be reduced.

Optionally, that a sending module 720 sends the time parameter indication information to the terminal device includes:
sending, by the sending module 720, the time parameter indication information and third indication information to the terminal device by using a second carrier, where the third indication information is used to indicate an identifier of a first carrier, and the first carrier is a carrier used to send the DCI.

In this application, the sending module 720 sends, to the UE by using the second carrier, the time parameter indication information and the third indication information that indicates the identifier of the first carrier used to send the DCI. The UE detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

The apparatus 700 according to this application may correspond to the base station in the downlink control information transmission method 300 in this application, and the foregoing and other operations and/or functions of the modules in the apparatus 700 are separately intended to implement the corresponding procedure of the method 300 in FIG. 3. For brevity, details are not described herein.

Therefore, before blind detection, the downlink control information transmission apparatus in this application indicates, by using the time parameter indication information, the detection period and/or the detection moment of detecting the DCI by the user equipment, and sends the DCI at the corresponding detection moment, so that a quantity of times of performing blind detection by the user equipment can be reduced, thereby reducing power consumption of the user equipment. In addition, the downlink control information transmission apparatus in this application is applicable to a case in which TTIs of different time lengths are configured for the user equipment, and the detection period and the detection moment of the user equipment can be flexibly configured based on an actual case, thereby improving user experience satisfaction.

FIG. 8 is a schematic block diagram of a downlink control information transmission apparatus 800 according to another embodiment of this application. As shown in FIG. 8, the apparatus 800 includes:
a receiving module 810, configured to receive time parameter indication information sent by a base station, where the time parameter indication information includes first indication information and/or second indication information, the first indication information is used to indicate a detection period of detecting downlink control information DCI by the terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment;
a determining module 820, configured to determine the detection period and/or the detection moment based on the time parameter indication information received by the receiving module 810; and
a detection module 830, configured to detect, based on the detection period and/or the detection moment that are/is determined by the determining module 820, the DCI sent by the base station to the apparatus 800.

In the downlink control information transmission apparatus in this application, before blind detection, the determining module 820 may determine, based on a delay requirement of a to-be-transmitted service, the detection period and the detection moment of detecting the DCI. When the delay requirement of the to-be-transmitted service is relatively low, the detection module 830 may detect the DCI in a relatively long detection period (for example, a detection period including three TTIs). When the delay requirement of the to-be-transmitted service is relatively high, the detection module 830 may detect the DCI in a relatively short detection period (for example, a detection period including one TTI). One detection period may include one or more detection moments, each detection moment is in a one-to-one correspondence with a TTI that carries DCI, and the detection moment coincides with a start moment of the TTI that carries the DCI. Therefore, a quantity of times of performing blind detection by the detection module 830 on a PDCCH can be effectively reduced without affecting the to-be-transmitted service, thereby reducing power consumption and overheads of the UE. In addition, for some emergent services that require the detection module 830 to immediately detect the DCI, in this application, the detection period and the detection moment of the UE can be adjusted by using the time parameter indication information, to meet the requirement of such services, thereby improving user experience satisfaction.

In this application, the time parameter indication information sent by the base station may include either the first indication information or the second indication information, or may include both the first indication information and the second indication information. After receiving the time parameter indication information including the first indication information, the UE may detect the DCI at a preset detection moment. After receiving the time parameter indication information including the second indication information, the UE may detect the DCI in a preset detection period. For example, the first indication information and the second indication information may be the first indication information and the second indication information in the method 200. For brevity, details are not described herein again. The foregoing embodiment is merely used as an example for description, and this application is not limited thereto.

Optionally, that a receiving module 810 receives time parameter indication information sent by a base station includes:
receiving, by the receiving module 810 by using a first carrier, the time parameter indication information sent by the base station, where the first carrier is a carrier used to send the DCI.

In this application, the receiving module 810 receives the time parameter indication information and the DCI by using a same carrier (namely, the first carrier), and the apparatus 800 detects a PDCCH in each TTI by default when establishing a link. After obtaining the time parameter indication information, the detection module 830 detects the DCI on a corresponding PDCCH based on the detection period and/or the detection moment that are/is indicated by the time parameter indication information. Therefore, a frequency domain resource can be saved and signaling overheads can be reduced.

Optionally, that a receiving module 810 receives time parameter indication information sent by a base station includes:
receiving, by the receiving module 810 by using a second carrier, the time parameter indication information and third indication information that are sent by the base station, where the third indication information is used to indicate an identifier of a first carrier, and the first carrier is a carrier used to send the DCI.

In this application, the time parameter indication information and the DCI are not received by using a same carrier. The receiving module 810 receives the time parameter indication information and the third indication information by using the second carrier, and the third indication information is used to indicate the identifier of the first carrier used to send the DCI. The detection module 830 detects the DCI on a corresponding PDCCH in the first carrier based on the detection period and/or the detection moment that are/is indicated by the time parameter indication information and the identifier that is of the first carrier and that is indicated by the third indication information. Therefore, a quantity of times of performing blind detection on a PDCCH can be reduced, thereby reducing power consumption of the UE.

The apparatus 800 according to this application may correspond to the terminal device in the downlink control information transmission method 400 in this application, and the foregoing and other operations and/or functions of the modules in the apparatus 800 are separately intended to implement the corresponding procedure of the method 400 in FIG. 4. For brevity, details are not described herein.

Therefore, before blind detection, the downlink control information transmission apparatus in this application determines, based on the time parameter indication information, the detection period and/or the detection moment of detecting the DCI, and detects the DCI at the corresponding detection moment, so that a quantity of times of performing blind detection can be reduced, thereby reducing power consumption of the user equipment. In addition, the downlink control information transmission apparatus in this application is applicable to a case in which TTIs of different time lengths are configured, and the detection period and the detection moment can be flexibly configured based on an actual case, thereby improving user experience satisfaction.

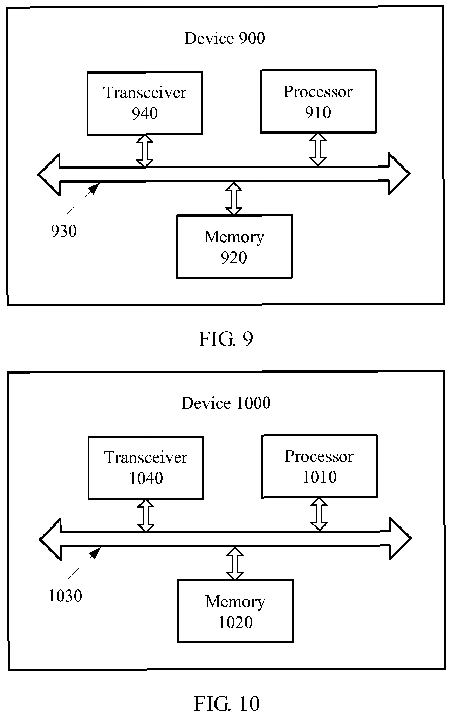

As shown in FIG. 9, this application further provides a downlink control information transmission device 900. The device 900 includes a processor 910, a memory 920, a bus system 930, and a transceiver 940. The processor 910, the memory 920, and the transceiver 940 are connected by using the bus system 930. The memory 920 is configured to store an instruction. The processor 910 is configured to execute the instruction stored in the memory 920, to control the transceiver 940 to receive a signal or send a signal.

The processor 910 is configured to determine a detection period of detecting downlink control information DCI by a terminal device and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI. The transceiver 940 is configured to send the DCI to the terminal device at the at least one detection moment in the detection period determined by the processor 910.

Therefore, the downlink control information transmission device provided in this application can effectively reduce a quantity of times of performing blind detection by the UE on a PDCCH without affecting a to-be-transmitted service, thereby reducing power consumption and overheads of the UE, and can further improve user experience satisfaction.

It should be understood that in this application, the processor 910 may be a central processing unit (central processing unit, CPU), or the processor 910 may be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

The memory 920 may include a read-only memory and a random access memory, and provide an instruction and data for the processor 910. A part of the memory 920 may further include a nonvolatile random access memory. For example, the memory 920 may further store device type information.

In addition to a data bus, the bus system 930 may further include a power bus, a control bus, a status signal bus, and the like. However, for clarity of description, various buses are marked as the bus system 930 in the figure.

In an implementation process, the steps of the foregoing method may be completed by using an integrated logic circuit of hardware in the processor 910 or by using an instruction in a form of software. The steps of the method disclosed with reference to this application may be directly performed by a hardware processor, or may be performed by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 920. The processor 910 reads information in the memory 920, and completes the steps of the foregoing method in combination with the hardware in the processor. To avoid repetition, details are not described herein.

Optionally, in an embodiment, the transceiver 940 is further configured to send time parameter indication information to the terminal device, where the time parameter indication information includes first indication information used to indicate the detection period, so that the detection period can be flexibly determined based on an actual case of the to-be-transmitted service.

Optionally, in an embodiment, the transceiver 940 is further configured to send time parameter indication information to the terminal device, where the time parameter indication information includes second indication information used to indicate the at least one detection moment, so that the detection moment can be flexibly determined. In addition, when there are a relatively large quantity of user equipments, different detection moments in a same detection period can be configured for different user equipments based on offsets, so that transmission resource utilization is improved.

Optionally, in an embodiment, the transceiver 940 is configured to send the time parameter indication information to the terminal device by using a first carrier, where the first carrier is a carrier used to send the DCI, so that a frequency domain resource can be saved and signaling overheads can be reduced.

Optionally, in an embodiment, the transceiver 940 is configured to send the time parameter indication information and third indication information to the terminal device by using a second carrier, where the third indication information is used to indicate an identifier of a first carrier, and the first carrier is a carrier used to send the DCI, so that a quantity of times of performing blind detection on a PDCCH can be reduced, thereby reducing power consumption of the UE.

It should be understood that the downlink control information transmission device 900 according to this application may correspond to the base station in the downlink control information transmission method 100 in this application, and the foregoing and other operations and/or functions of the modules in the device 900 are separately intended to implement the corresponding procedure of the method in FIG. 1. For brevity, details are not described herein.

Therefore, before blind detection, the downlink control information transmission device in this application determines the detection period and the detection moment of detecting the DCI by the user equipment, and sends the DCI at the corresponding detection moment, so that a quantity of times of performing blind detection by the user equipment can be reduced, thereby reducing power consumption of the user equipment. In addition, the downlink control information transmission device in this application is applicable to a case in which TTIs of different time lengths are configured for the user equipment, and the detection period and the detection moment of the user equipment can be flexibly configured based on an actual case by using the time parameter indication information, thereby improving user experience satisfaction.

As shown in FIG. 10, this application further provides a downlink control information transmission device 1000. The device 1000 includes a processor 1010, a memory 1020, a bus system 1030, and a transceiver 1040. The processor 1010, the memory 1020, and the transceiver 1040 are connected by using the bus system 1030. The memory 1020 is configured to store an instruction. The processor 1010 is configured to execute the instruction stored in the memory 1020, to control the transceiver 1040 to receive a signal or send a signal.

The processor 1010 is configured to determine a detection period of detecting downlink control information DCI and at least one detection moment in the detection period, where the detection period includes at least two transmission time intervals TTIs, the at least two TTIs include at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI. The transceiver 1040 is configured to detect, at the at least one detection moment in the detection period determined by the processor 1010, the DCI sent by a base station to the device 1000.

Therefore, the downlink control information transmission device provided in this application can effectively reduce a quantity of times of performing blind detection by the UE on a PDCCH without affecting a to-be-transmitted service, thereby reducing power consumption and overheads of the UE, and can further improve user experience satisfaction.

It should be understood that in this application, the processor 1010 may be a CPU, or the processor 1010 may be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The memory 1020 may include a read-only memory and a random access memory, and provide an instruction and data for the processor 1010. A part of the memory 1020 may further include a nonvolatile random access memory. For example, the memory 1020 may further store device type information.

In addition to a data bus, the bus system 1030 may further include a power bus, a control bus, a status signal bus, and the like. However, for clarity of description, various buses are marked as the bus system 1030 in the figure.

In an implementation process, the steps of the foregoing method may be completed by using an integrated logic circuit of hardware in the processor 1010 or by using an instruction in a form of software. The steps of the method disclosed with reference to this application may be directly performed by a hardware processor, or may be performed by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1020. The processor 1010 reads information in the memory 1020, and completes the steps of the foregoing method in combination with the hardware in the processor. To avoid repetition, details are not described herein.

Optionally, in an embodiment, the transceiver 1040 is further configured to receive time parameter indication information sent by the base station, where the time parameter indication information includes first indication information used to indicate the detection period. That the processor 1010 determines a detection period includes: determining, by the processor 1010, the detection period based on the first indication information, so that the detection period can be flexibly determined based on an actual case of the to-be-transmitted service.

Optionally, in an embodiment, the transceiver 1040 is further configured to receive time parameter indication information sent by the base station, where the time parameter indication information includes second indication information used to indicate the at least one detection moment. That the processor 1010 determines at least one detection moment includes: determining, by the processor 1010, the at least one detection moment based on the second indication information, so that the detection moment can be flexibly determined. In addition, when there are a relatively large quantity of user equipments, different detection moments in a same detection period can be configured for different user equipments based on offsets, so that transmission resource utilization can be improved.

Optionally, in an embodiment, the transceiver 1040 is configured to receive, by using a first carrier, the time parameter indication information sent by the base station, where the first carrier is a carrier used to send the DCI, so that a frequency domain resource can be saved and signaling overheads can be reduced.

Optionally, in an embodiment, the transceiver 1040 is configured to receive, by using a second carrier, the time parameter indication information and third indication information that are sent by the base station, where the third indication information is used to indicate an identifier of a first carrier, and the first carrier is a carrier used to send the DCI, so that a quantity of times of performing blind detection on a PDCCH can be reduced, thereby reducing power consumption of the UE.

The device 1000 according to this application may correspond to the terminal device in the downlink control information transmission method 200 in this application, and the foregoing and other operations and/or functions of the modules in the device 1000 are separately intended to implement the corresponding procedure of the method 200 in FIG. 2. For brevity, details are not described herein.

Therefore, before blind detection, the downlink control information transmission device in this application determines the detection period and the detection moment of detecting the DCI, and detects the DCI at the corresponding detection moment, so that a quantity of times of performing blind detection by the user equipment can be reduced, thereby reducing power consumption of the user equipment. In addition, the downlink control information transmission device in this application is applicable to a case in which TTIs of different time lengths are configured for the user equipment, and the detection period and the detection moment of the user equipment can be flexibly configured based on an actual case by using the time parameter indication information, thereby improving user experience satisfaction.

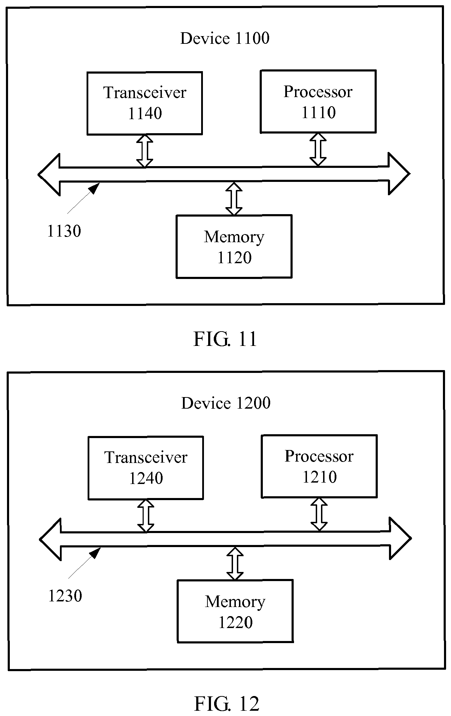

As shown in FIG. 11, this application further provides a downlink control information transmission device 1100. The device 1100 includes a processor 1110, a memory 1120, a bus system 1130, and a transceiver 1140. The processor 1110, the memory 1120, and the transceiver 1140 are connected by using the bus system 1130. The memory 1120 is configured to store an instruction. The processor 1110 is configured to execute the instruction stored in the memory 1120, to control the transceiver 1140 to receive a signal or send a signal.

The processor 1110 is configured to generate time parameter indication information, where the time parameter indication information includes first indication information and/or second indication information, the first indication information is used to indicate a detection period of detecting downlink control information DCI by a terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment. The transceiver 1140 is configured to send the time parameter indication information generated by the processor 1110 and the DCI to the terminal device, so that the terminal device detects the DCI at the detection moment in the detection period based on the time parameter indication information.

Therefore, the downlink control information transmission device provided in this application can effectively reduce a quantity of times of performing blind detection by the UE on a PDCCH without affecting a to-be-transmitted service, thereby reducing power consumption and overheads of the UE. In addition, for some emergent services that require the UE to immediately detect the DCI, in this application, the detection period and the detection moment of the UE can be adjusted by using the time parameter indication information, to meet the requirement of such services, thereby improving user experience satisfaction.

It should be understood that in this application, the processor 1110 may be a CPU, or the processor 1110 may be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The memory 1120 may include a read-only memory and a random access memory, and provide an instruction and data for the processor 1110. A part of the memory 1120 may further include a nonvolatile random access memory. For example, the memory 1120 may further store device type information.

In addition to a data bus, the bus system 1130 may further include a power bus, a control bus, a status signal bus, and the like. However, for clarity of description, various buses are marked as the bus system 1130 in the figure.

In an implementation process, the steps of the foregoing method may be completed by using an integrated logic circuit of hardware in the processor 1110 or by using an instruction in a form of software. The steps of the method disclosed with reference to this application may be directly performed by a hardware processor, or may be performed by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1120. The processor 1110 reads information in the memory 1120, and completes the steps of the foregoing method in combination with the hardware in the processor. To avoid repetition, details are not described herein.

Optionally, in an embodiment, the transceiver 1140 is configured to send the time parameter indication information to the terminal device by using a first carrier, where the first carrier is a carrier used to send the DCI, so that a frequency domain resource can be saved and signaling overheads can be reduced.

Optionally, in an embodiment, the transceiver 1140 is configured to send the time parameter indication information and third indication information to the terminal device by using a second carrier, where the third indication information is used to indicate an identifier of a first carrier, and the first carrier is a carrier used to send the DCI, so that a quantity of times of performing blind detection on a PDCCH can be reduced, thereby reducing power consumption of the UE.

The device 1100 according to this application may correspond to the base station in the downlink control information transmission method 300 in this application, and the foregoing and other operations and/or functions of the modules in the device 1100 are separately intended to implement the corresponding procedure of the method 300 in FIG. 3. For brevity, details are not described herein.

Therefore, before blind detection, the downlink control information transmission device in this application indicates, by using the time parameter indication information, the detection period and/or the detection moment of detecting the DCI by the user equipment, and sends the DCI at the corresponding detection moment, so that a quantity of times of performing blind detection by the user equipment can be reduced, thereby reducing power consumption of the user equipment. In addition, the downlink control information transmission device in this application is applicable to a case in which TTIs of different time lengths are configured for the user equipment, and the detection period and the detection moment of the user equipment can be flexibly configured based on an actual case, thereby improving user experience satisfaction.

As shown in FIG. 12, this application further provides a downlink control information transmission device 1200. The device 1200 includes a processor 1210, a memory 1220, a bus system 1230, and a transceiver 1240. The processor 1210, the memory 1220, and the transceiver 1240 are connected by using the bus system 1230. The memory 1220 is configured to store an instruction. The processor 1210 is configured to execute the instruction stored in the memory 1220, to control the transceiver 1240 to receive a signal or send a signal.

The transceiver 1240 is configured to receive time parameter indication information sent by a base station, where the time parameter indication information includes first indication information and/or second indication information, the first indication information is used to indicate a detection period of detecting downlink control information DCI by the terminal device, the second indication information is used to indicate a detection moment, the detection period includes at least one transmission time interval TTI, a TTI that carries the DCI in the at least one TTI is in a one-to-one correspondence with the detection moment of the terminal device, and a start moment of the TTI that carries the DCI in the at least one TTI coincides with the detection moment. The processor 1210 is configured to determine the detection period and/or the detection moment based on the time parameter indication information received by the transceiver 1240. The processor 1210 is configured to detect, based on the detection period and/or the detection moment, the DCI sent by the base station to the device 1200.

Therefore, the downlink control information transmission device provided in this application can effectively reduce a quantity of times of performing blind detection by the UE on a PDCCH without affecting a to-be-transmitted service, thereby reducing power consumption and overheads of the UE. In addition, for some emergent services that require immediate detection on the DCI, in this application, the detection period and the detection moment can be adjusted by using the time parameter indication information, to meet the requirement of such services, thereby improving user experience satisfaction.

It should be understood that in this application, the processor 1210 may be a CPU, or the processor 1210 may be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The memory 1220 may include a read-only memory and a random access memory, and provide an instruction and data for the processor 1210. A part of the memory 1220 may further include a nonvolatile random access memory. For example, the memory 1220 may further store device type information.

In addition to a data bus, the bus system 1230 may further include a power bus, a control bus, a status signal bus, and the like. However, for clarity of description, various buses are marked as the bus system 1230 in the figure.

In an implementation process, the steps of the foregoing method may be completed by using an integrated logic circuit of hardware in the processor 1210 or by using an instruction in a form of software. The steps of the method disclosed with reference to this application may be directly performed by a hardware processor, or may be performed by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1220. The processor 1210 reads information in the memory 1220, and completes the steps of the foregoing method in combination with the hardware in the processor. To avoid repetition, details are not described herein.

Optionally, in an embodiment, the transceiver 1240 is configured to send the time parameter indication information to the terminal device by using a first carrier, where the first carrier is a carrier used to send the DCI, so that a frequency domain resource can be saved and signaling overheads can be reduced.

Optionally, in an embodiment, the transceiver 1240 is configured to send the time parameter indication information and third indication information to the terminal device by using a second carrier, where the third indication information is used to indicate an identifier of a first carrier, and the first carrier is a carrier used to send the DCI, so that a quantity of times of performing blind detection on a PDCCH can be reduced, thereby reducing power consumption of the UE.

The device 1200 according to this application may correspond to the terminal device in the downlink control information transmission method 400 in this application, and the foregoing and other operations and/or functions of the modules in the device 1200 are separately intended to implement the corresponding procedure of the method 400 in FIG. 4. For brevity, details are not described herein.

Therefore, before blind detection, the downlink control information transmission device in this application determines, based on the time parameter indication information, the detection period and/or the detection moment of detecting the DCI, and detects the DCI at the corresponding detection moment, so that a quantity of times of performing blind detection can be reduced, thereby reducing power consumption of the user equipment. In addition, the downlink control information transmission device in this application is applicable to a case in which TTIs of different time lengths are configured, and the detection period and the detection moment can be flexibly configured based on an actual case, thereby improving user experience satisfaction.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in this application, "B corresponding to A" indicates that B is associated with A, and B may be determined based on A. However, it should be further understood that determining B based on A does not mean that B is determined based on A only, and B may also be determined based on A and/or other information.

A person of ordinary skill in the art may be aware that the units and algorithm steps in the examples described with reference to the embodiments disclosed in this specification can be implemented by electronic hardware, computer software, or a combination thereof. To clearly describe the interchangeability between the hardware and the software, composition and steps of each example have been generally described based on functions in the foregoing descriptions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of this application.

In addition, the function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions of this application essentially, or the part contributing to the prior art, or all or some of the technical solutions may be implemented in a form of a software product. The computer software product is stored in a storage medium and includes several instructions for enabling a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

To make the application document brief and clear, technical features and descriptions in one of the foregoing embodiments may be considered to be applicable to other embodiments, and details are not described in the other embodiments.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A downlink control information transmission method, wherein the method comprises:
determining, by a network side device, a detection period of detecting downlink control information DCI by a terminal device and at least one detection moment in the detection period, wherein the detection period comprises at least two transmission time intervals TTIs, the at least two TTIs comprise at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
sending, by the network side device, the DCI to the terminal device at the at least one detection moment in the detection period.

2. The method according to claim 1, wherein the method further comprises:
sending, by the network side device, time parameter indication information to the terminal device, wherein the time parameter indication information comprises first indication information used to indicate the detection period.

3. The method according to claim 1 or 2, wherein the method further comprises:
sending, by the network side device, time parameter indication information to the terminal device, wherein the time parameter indication information comprises second indication information used to indicate the at least one detection moment.

4. The method according to claim 2 or 3, wherein the sending, by the network side device, time parameter indication information to the terminal device comprises:
sending, by the network side device, the time parameter indication information to the terminal device by using a first carrier, wherein the first carrier is a carrier used to send the DCI.

5. The method according to claim 2 or 3, wherein the sending, by the network side device, time parameter indication information to the terminal device comprises:
sending, by the network side device, the time parameter indication information and third indication information to the terminal device by using a second carrier, wherein the third indication information is used to indicate an identifier of a first carrier, and the first carrier is a carrier used to send the DCI.

6. A downlink control information transmission method, wherein the method comprises:
determining, by a terminal device, a detection period of detecting downlink control information DCI and at least one detection moment in the detection period, wherein the detection period comprises at least two transmission time intervals TTIs, the at least two TTIs comprise at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
detecting, by the terminal device at the at least one detection moment in the detection period, the DCI sent by a network side device to the terminal device.

7. The method according to claim 6, wherein the method further comprises:
receiving, by the terminal device, time parameter indication information sent by the network side device, wherein the time parameter indication information comprises first indication information used to indicate the detection period; and
the determining, by a terminal device, a detection period comprises:
determining, by the terminal device, the detection period based on the first indication information.

8. The method according to claim 6 or 7, wherein the method further comprises:
receiving, by the terminal device, time parameter indication information sent by the network side device, wherein the time parameter indication information comprises second indication information used to indicate the at least one detection moment; and
the determining, by a terminal device, at least one detection moment comprises:
determining, by the terminal device, the at least one detection moment based on the second indication information.

9. The method according to claim 7 or 8, wherein the receiving, by the terminal device, time parameter indication information sent by the network side device comprises:
receiving, by the terminal device by using a first carrier, the time parameter indication information sent by the network side device, wherein the first carrier is a carrier used to send the DCI.

10. The method according to claim 7 or 8, wherein the receiving, by the terminal device, time parameter indication information sent by the network side device comprises:
receiving, by the terminal device by using a second carrier, the time parameter indication information and third indication information that are sent by the network side device, wherein the third indication information is used to indicate an identifier of a first carrier, and the first carrier is a carrier used to send the DCI.

11. A downlink control information transmission method, wherein the method comprises:
generating, by a network side device, time parameter indication information, wherein the time parameter indication information comprises first indication information and/or second indication information, the first indication information is used to indicate a detection period of detecting downlink control information DCI by a terminal device, the second indication information is used to indicate a detection moment of detecting the DCI by the terminal device, the detection period comprises at least one transmission time interval TTI, a TTI that carries the DCI in the at least one TTI is in a one-to-one correspondence with the detection moment, and a start moment of the TTI that carries the DCI in the at least one TTI coincides with the detection moment; and
sending, by the network side device, the time parameter indication information and the DCI to the terminal device.

12. The method according to claim 11, wherein the sending, by the network side device, the time parameter indication information to the terminal device comprises:
sending, by the network side device, the time parameter indication information to the terminal device by using a first carrier, wherein the first carrier is a carrier used to send the DCI.

13. The method according to claim 11, wherein the sending, by the network side device, the time parameter indication information to the terminal device comprises:
sending, by the network side device, the time parameter indication information and third indication information to the terminal device by using a second carrier, wherein the third indication information is used to indicate an identifier of a first carrier, and the first carrier is a carrier used to send the DCI.

14. A downlink control information transmission method, wherein the method comprises:
receiving, by a terminal device, time parameter indication information sent by a network side device, wherein the time parameter indication information comprises first indication information and/or second indication information, the first indication information is used to indicate a detection period of detecting downlink control information DCI by the terminal device, the second indication information is used to indicate a detection moment of detecting the DCI by the terminal device, the detection period comprises at least one transmission time interval TTI, a TTI that carries the DCI in the at least one TTI is in a one-to-one correspondence with the detection moment, and a start moment of the TTI that carries the DCI in the at least one TTI coincides with the detection moment;
determining, by the terminal device, the detection period and/or the detection moment based on the time parameter indication information; and
detecting, by the terminal device at the detection moment in the detection period, the DCI sent by the network side device to the terminal device.

15. The method according to claim 14, wherein the receiving, by a terminal device, time parameter indication information sent by a network side device comprises:
receiving, by the terminal device by using a first carrier, the time parameter indication information sent by the network side device, wherein the first carrier is a carrier used to send the DCI.

16. The method according to claim 14, wherein the receiving, by a terminal device, time parameter indication information sent by a network side device comprises:
receiving, by the terminal device by using a second carrier, the time parameter indication information and third indication information that are sent by the network side device, wherein the third indication information is used to indicate an identifier of a first carrier, and the first carrier is a carrier used to send the DCI.

17. A network side device, wherein the network side device comprises:
a determining module, configured to determine a detection period of detecting downlink control information DCI by a terminal device and at least one detection moment in the detection period, wherein the detection period comprises at least two transmission time intervals TTIs, the at least two TTIs comprise at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
a sending module, configured to send the DCI to the terminal device at the at least one detection moment in the detection period determined by the determining module.

18. The network side device according to claim 17, wherein the sending module is further configured to:
send time parameter indication information to the terminal device, wherein the time parameter indication information comprises first indication information used to indicate the detection period.

19. The network side device according to claim 17 or 18, wherein the sending module is further configured to:
send time parameter indication information to the terminal device, wherein the time parameter indication information comprises second indication information used to indicate the at least one detection moment.

20. The network side device according to claim 18 or 19, wherein that the sending module sends time parameter indication information to the terminal device comprises:
sending, by the sending module, the time parameter indication information to the terminal device by using a first carrier, wherein the first carrier is a carrier used to send the DCI.

21. The network side device according to claim 18 or 19, wherein that the sending module sends time parameter indication information to the terminal device comprises:
sending, by the sending module, the time parameter indication information and third indication information to the terminal device by using a second carrier, wherein the third indication information is used to indicate an identifier of a first carrier, and the first carrier is a carrier used to send the DCI.

22. A terminal device, wherein the terminal device comprises:
a determining module, configured to determine a detection period of detecting downlink control information DCI and at least one detection moment in the detection period, wherein the detection period comprises at least two transmission time intervals TTIs, the at least two TTIs comprise at least one TTI that carries the DCI and at least one TTI that does not carry the DCI, the at least one detection moment is in a one-to-one correspondence with the at least one TTI that carries the DCI, and the at least one detection moment coincides with a start moment of the at least one TTI that carries the DCI; and
a detection module, configured to detect, at the at least one detection moment in the detection period determined by the determining module, the DCI sent by a network side device to the terminal device.

23. The terminal device according to claim 22, wherein the terminal device further comprises:
a receiving module, configured to receive time parameter indication information sent by the network side device, wherein the time parameter indication information comprises first indication information used to indicate the detection period; and
that a determining module determines a detection period comprises:
determining, by the determining module, the detection period based on the first indication information.

24. The terminal device according to claim 22 or 23, wherein the terminal device further comprises:
a receiving module, configured to receive time parameter indication information sent by the network side device, wherein the time parameter indication information comprises second indication information used to indicate the at least one detection moment; and
that a determining module determines at least one detection moment comprises:
determining, by the determining module, the at least one detection moment based on the second indication information.

25. The terminal device according to claim 23 or 24, wherein that a receiving module receives time parameter indication information sent by the network side device comprises:
receiving, by the receiving module by using a first carrier, the time parameter indication information sent by the network side device, wherein the first carrier is a carrier used to send the DCI.

26. The terminal device according to claim 23 or 24, wherein that a receiving module receives time parameter indication information sent by the network side device comprises:
receiving, by the receiving module by using a second carrier, the time parameter indication information and third indication information that are sent by the network side device, wherein the third indication information is used to indicate an identifier of a first carrier, and the first carrier is a carrier used to send the DCI.

27. A network side device, wherein the network side device comprises:
a generation module, configured to generate time parameter indication information, wherein the time parameter indication information comprises first indication information and/or second indication information, the first indication information is used to indicate a detection period of detecting downlink control information DCI by a terminal device, the second indication information is used to indicate a detection moment of detecting the DCI by the terminal device, the detection period comprises at least one transmission time interval TTI, a TTI that carries the DCI in the at least one TTI is in a one-to-one correspondence with the detection moment, and a start moment of the TTI that carries the DCI in the at least one TTI coincides with the detection moment; and
a sending module, configured to send the time parameter indication information generated by the generation module and the DCI to the terminal device.

28. The network side device according to claim 27, wherein that a sending module sends the time parameter indication information to the terminal device comprises:
sending, by the sending module, the time parameter indication information to the terminal device by using a first carrier, wherein the first carrier is a carrier used to send the DCI.

29. The network side device according to claim 27, wherein that a sending module sends the time parameter indication information to the terminal device comprises:
sending, by the sending module, the time parameter indication information and third indication information to the terminal device by using a second carrier, wherein the third indication information is used to indicate an identifier of a first carrier, and the first carrier is a carrier used to send the DCI.

30. A terminal device, wherein the terminal device comprises:
a receiving module, configured to receive time parameter indication information sent by a network side device, wherein the time parameter indication information comprises first indication information and/or second indication information, the first indication information is used to indicate a detection period of detecting downlink control information DCI by the terminal device, the second indication information is used to indicate a detection moment of detecting the DCI by the terminal device, the detection period comprises at least one transmission time interval TTI, a TTI that carries the DCI in the at least one TTI is in a one-to-one correspondence with the detection moment, and a start moment of the TTI that carries the DCI in the at least one TTI coincides with the detection moment;
a determining module, configured to determine the detection period and/or the detection moment based on the time parameter indication information received by the receiving module; and
a detection module, configured to detect, based on the detection period and/or the detection moment that are/is determined by the determining module, the DCI sent by the network side device to the terminal device.

31. The terminal device according to claim 30, wherein that a receiving module receives time parameter indication information sent by a network side device comprises:
receiving, by the receiving module by using a first carrier, the time parameter indication information sent by the network side device, wherein the first carrier is a carrier used to send the DCI.

32. The terminal device according to claim 30, wherein that a receiving module receives time parameter indication information sent by a network side device comprises:
receiving, by the receiving module by using a second carrier, the time parameter indication information and third indication information that are sent by the network side device, wherein the third indication information is used to indicate an identifier of a first carrier, and the first carrier is a carrier used to send the DCI.
